(19) Europäisches Patentamt
European Patent Office
Office européen des brevets

(11) EP 4 160 770 B1

(12) EUROPEAN PATENT SPECIFICATION

(45) Date of publication and mention of the grant of the patent:
**20.11.2024 Bulletin 2024/47**

(21) Application number: **22749937.3**

(22) Date of filing: **26.01.2022**

(51) International Patent Classification (IPC):
***H01M 10/0565*** *(2010.01)* ***H01M 10/052*** *(2010.01)*
***C08G 83/00*** *(2006.01)* ***C08J 5/20*** *(2006.01)*
***C08L 5/16*** *(2006.01)* ***C08G 18/64*** *(2006.01)*
***C08G 18/72*** *(2006.01)* ***C08G 18/73*** *(2006.01)*
***C08J 3/24*** *(2006.01)* ***C08G 18/76*** *(2006.01)*

(52) Cooperative Patent Classification (CPC):
**C08L 5/16; C08G 18/6484; C08G 18/724; C08G 18/73; C08G 18/7671; C08G 83/007; H01M 10/052; H01M 10/0565;** C08J 3/24; C08J 2300/21; H01M 2300/0082; Y02E 60/10; Y02P 70/50

(86) International application number:
**PCT/KR2022/001399**

(87) International publication number:
**WO 2022/169186 (11.08.2022 Gazette 2022/32)**

# (54) COMPOSITION FOR PREPARING SOLID ELECTROLYTE, AND SOLID ELECTROLYTE AND LITHIUM SECONDARY BATTERY USING THE SAME

ZUSAMMENSETZUNG ZUR HERSTELLUNG EINES FESTEN ELEKTROLYTEN, UND FESTER ELEKTROLYT UND LITHIUM-SEKUNDÄRBATTERIE, DIE DIESEN VERWENDET

COMPOSITION POUR LA PRÉPARATION D'UN ÉLECTROLYTE SOLIDE, ÉLECTROLYTE SOLIDE ET BATTERIE SECONDAIRE AU LITHIUM L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.02.2021 KR 20210016331**

(43) Date of publication of application:
**05.04.2023 Bulletin 2023/14**

(73) Proprietors:
- **LG Energy Solution, Ltd.**
  **Seoul 07335 (KR)**
- **Korea University Research and Business Foundation**
  **Seoul 02841 (KR)**

(72) Inventors:
- **KANG, Sung Joong**
  **Daejeon 34122 (KR)**
- **HAH, Hoe Jin**
  **Daejeon 34122 (KR)**
- **SEO, Ji Hun**
  **Seoul 02843 (KR)**
- **KIM, Dong Wan**
  **Seoul 06603 (KR)**
- **SEO, Ji Ae**
  **Suwon-si, Gyeonggi-do 16384 (KR)**
- **LEE, Gwang Hee**
  **Yongin-si, Gyeonggi-do 17117 (KR)**

(74) Representative: **Goddar, Heinz J.**
**Boehmert & Boehmert Anwaltspartnerschaft mbB**
**Pettenkoferstrasse 22**
**80336 München (DE)**

(56) References cited:
**JP-A- 2019 094 452** **US-B2- 10 700 357**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **YING-CHENG LIN, KOHZO ITO, HIDEAKI YOKOYAMA: "Solid polymer electrolyte based on crosslinked polyrotaxane", POLYMER, ELSEVIER, AMSTERDAM, NL, vol. 136, 27 December 2017 (2017-12-27), AMSTERDAM, NL, pages 121 - 127, XP055529992, ISSN: 0032-3861, DOI: 10.1016/j.polymer.2017.12.046**
- **KOYAMA YASUHITO: "Synthesis of topologically crosslinked polymers with rotaxane-crosslinking points", POLYMER JOURNAL, NATURE PUBLISHING GROUP UK, LONDON, vol. 46, no. 6, 1 June 2014 (2014-06-01), London , pages 315 - 322, XP055955427, ISSN: 0032-3896, DOI: 10.1038/pj.2014.9**
- **KOHSAKA YASUHIRO, KAZUKO NAKAZONO, YASUHITO KOYAMA, SHIGEO ASAI, AND TOSHIKAZU TAKATA: "Size-complementary rotaxane cross-linking for the stabilization and degradation of a supramolecular network", ANGEWANDTE CHEMIE, INTERNATIONAL EDITION, vol. 50, no. 21, 27 April 2011 (2011-04-27), pages 4872 - 4875, XP055955428, DOI: 10.1002/anie.201008020**
- **SAWADA JUN, DAISUKE AOKI, HIDEYUKI OTSUKA, TOSHIKAZU TAKATA: "A guiding principle for strengthening crosslinked polymers: synthesis and application of mobility controlling rotaxane crosslinkers", ANGEWANDTE CHEMIE, INTERNATIONAL EDITION, vol. 58, no. 9, 2 January 2019 (2019-01-02), pages 2765 - 2768, XP055955430, DOI: 10.1002/anie.201813439**


Remarks:

The file contains technical information submitted after the application was filed and not included in this specification

## Description

### TECHNICAL FIELD

This application claims priority from Korean Patent Application No. 10-2021-0016331, filed on February 04, 2021.

The present invention relates to a composition for preparing a solid electrolyte, and a solid electrolyte and a lithium secondary battery using the same.

### BACKGROUND ART

A lithium secondary battery may be miniaturized, and has high energy density and working voltage, thereby being applied in various fields including mobile devices, electronic products, electric vehicles, and the like. As the field of application of a lithium secondary battery becomes diverse, required physical properties conditions of the lithium secondary battery are also increasing, and particularly, there is a demand for the development of a lithium secondary battery which may be stably driven in various environments.

In general, a secondary battery is manufactured by mounting an electrode assembly composed of a negative electrode, a positive electrode, and a separator inside a case in the form of a cylinder, prism, or pouch having a certain space, and injecting an electrolyte into the electrode assembly.

Typically, as an electrolyte for an electrochemical device, a liquid electrolyte prepared by dissolving a salt in a non-aqueous organic solvent has been mainly used. However, such a liquid electrolyte causes the deterioration of electrode materials and there is a high possibility of the volatilization of an organic solvent, and also, combustion due to temperature rise occurs, and there is a risk of leakage, so that it difficult to implement various types of electrochemical devices which require safety.

A solid electrolyte has an advantage in that it has higher electrochemical stability than a liquid electrolyte. However, the ion conductivity of a solid electrolyte at room temperature is significantly lower than that of a liquid electrolyte, and although research is actively being conducted to solve the problem, there are still limitations in that when the ion conductivity is increased, the electrochemical window is reduced, and the like.

### DISCLOSURE OF THE INVENTION

### TECHNICAL PROBLEM

An aspect of the present invention provides a solid electrolyte having increased flexibility through the cross-linking of a supramolecular material.

Another aspect of the present invention provides a lithium secondary battery having improved stability and ion conductivity by including the solid electrolyte.

### TECHNICAL SOLUTION

According to an aspect of the present invention, there is provided a composition for preparing a solid electrolyte including a polyrotaxane compound, a cross-linking agent, a lithium salt, and an organic solvent, wherein the cross-linking agent includes a compound represented by Formula 1 below and a compound represented by Formula 2.

[Formula 1]

$$O=C=N-L1-N=C=O$$

In Formula 1 above, L1 is a C1 to C10 alkylene group, and

[Formula 2]

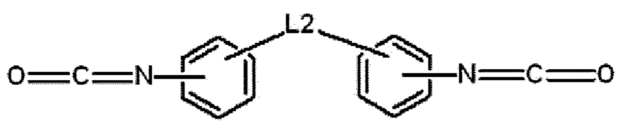

in Formula 2 above, L2 is a C1 to C5 alkylene group.

According to another aspect of the present invention, there is provided a method for preparing a solid electrolyte for a lithium secondary battery including thermal-curing the composition for preparing a solid electrolyte.

According to another aspect of the present invention, there is provided a solid electrolyte for a lithium secondary battery comprising a thermo-cured product of the composition for preparing a solid electrolyte.

According to another aspect of the present invention, there is provided a lithium secondary battery including a positive electrode having a positive electrode active material, a negative electrode having a negative electrode active material, and the solid electrolyte for a lithium secondary battery interposed between the positive electrode and the negative electrode.

## ADVANTAGEOUS EFFECTS

The present invention may provide a solid electrolyte having excellent flexibility, tensile strength, and ion conductivity.

In addition, the present invention may provide a lithium ion battery having improved stability and ion conductivity by including the solid electrolyte.

## BRIEF DESCRIPTION OF THE DRAWINGS

FIG. 1 is a view showing the molecular structure of polyrotaxane;

FIG. 2 is a view showing a molecular structure (a) of a linear polymer Pullulan used in Comparative Example 3 herein and a molecular structure (b) of a ring polymer PCD used in Comparative Example 4 herein;

FIG. 3 is a schematic view showing a cross-linking network formed by a polyrotaxane compound through a cross-linking agent in a solid electrolyte according to the present invention;

FIG. 4 is a view showing changes in ion conductivity according to the temperatures of a solid electrolyte prepared in Example 1 of the present invention;

FIG. 5 shows measurement results of the tensile physical properties of solid electrolytes prepared in Example 1 and Comparative Examples 1 to 4 of the present invention; and

FIG. 6 is a view showing CV curves of a battery to which the solid electrolyte prepared in Example 1 of the present invention is applied.

## BEST MODE FOR CARRYING OUT THE INVENTION

Hereinafter, the present invention will be described in more detail.

A polymer most commonly used in a solid polymer electrolyte is poly(ethylene oxide) (PEG), and despite being a solid, PEO has the ability to conduct lithium ions, but has low flexibility due to high crystallinity, and cannot dissociate a large amount of lithium ions due to a low dielectric constant, and thus, has low ion conductivity at room temperature, so that it is difficult to apply PEO to a lithium secondary battery. Therefore, there have been a number of studies conducted to increase ion conductivity through modification such as blending a PEO-based polymer or synthesizing the PEO-based polymer into a block copolymer.

However, when ion conductivity is increased through the above methods, there is a problem in that mechanical properties, which are in a trade-off relationship with ion conductivity, are deteriorated.

Therefore, the present inventors have discovered that it is possible to improve both ion conductivity and electrochemical window by introducing polyrotaxane, which is a supramolecular material. Particularly, it has been confirmed that there is an effect of significantly improving flexibility in combination with a specific cross-linking agent.

The polyrotaxane is a polymer chain of a linear structure, for example, a structure ((b) of FIG. 1) in which a cyclic ring molecule ((a) of FIG. 1) such as cyclodextrin is threaded on polyethylene glycol (PEG), and is a supramolecular material in which a ring molecule may move and rotate along a polymer chain. Polyrotaxane may form a network structure as shown in FIG. 3 through a cross-linking agent.

Specifically, a composition for preparing a solid electrolyte of the present invention includes a polyrotaxane compound, a cross-linking agent, a lithium salt, and an organic solvent, and hereinafter, each component will be described in more detail.

## Preparation of composition for preparing solid electrolyte

### (a) Polyrotaxane

In an embodiment of the present invention, the polyrotaxane compound is used as a matrix polymer.

In an embodiment of the present invention, the polyrotaxane compound includes 10 to 90, preferably 10 to 50 alpha-cyclodextrin (α-CD) molecules. When 90 or less, preferably 50 or less of the α-CD molecules are included, there is an advantage in that the molecular mobility of polyrotaxane is more active. The α-CD molecule has a size suitable for the formation of an inclusion complex with PEG, and has an advantage of facilitating synthesis compared to a polyrotaxane preparation method using β-CD and γ-CD. In addition, when 90 or less, preferably 50 or less of the α-CD molecules are included, the molecular mobility of polyrotaxane is more active, and accordingly, there is an advantage that it is possible to secure high ion conductivity.

The α-CD includes 18 hydroxy groups in the molecule, and since a functional group may be easily introduced through the hydroxyl group, a cross-linking point may be formed at a high density, and also, a α-CD thus cross-linked may move or rotate along a polymer chain, and thus, may have high flexibility and ion conductivity.

In an embodiment of the present invention, a terminal group of the polyrotaxane compound may have a structure represented by Formula E below.

[Formula E]

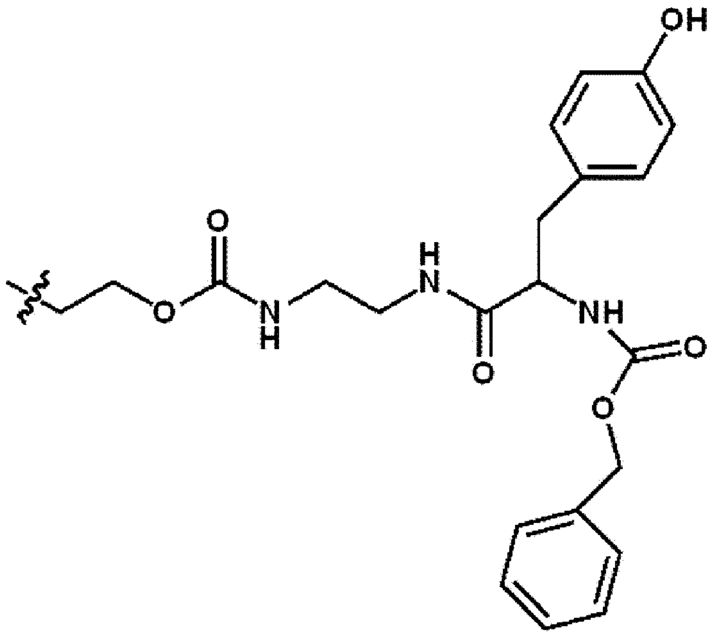

In addition, the terminal group of the polyrotaxane compound may be a functional group formed by connecting a compound selected from the group consisting of N-carbobenzoxy-L-tyrosine and N-carbobenzoxy-L-phenylalanine, and 1-adamantanecarboxylic acid.

In an embodiment of the present invention, the weight average molecular weight of the polyrotaxane compound may be 10,000 g/mol to 100,000 g/mol, preferably 20,000 g/mol to 90,000 g/mol, and most preferably 40,000 g/mol to 60,000 g/mol. When included in the above range, there is an effect that molecular motility is maximized.

In the present invention, the "weight average molecular weight" may refer to a conversion value for a standard polystyrene measured by gel permeation chromatography (GPC), and unless otherwise specified, molecular weight may refer to weight average molecular weight. For example, in the present invention, the weight average molecular weight is measured using Agilent Corporation's 1200 series under GPC conditions, and a column used at this time may be Agilent Corporation's PL mixed B column and a solvent used is DMSO.

In an embodiment of the present invention, the content of the polyrotaxane compound may be 5 wt% to 20 wt%, preferably 8 wt% to 15 wt%, based on the total weight of the composition for preparing a solid electrolyte.

When the content of the polyrotaxane compound is in the above range, it is preferable in that high ion conductivity may be secured. Specifically, when less than 5 wt%, there is a problem in that the overall uniformity of the surface is lowered due to a small content of polyrotaxane, so that it is difficult to form a recoverable single film, and when greater than 20 wt%, there is a problem in that ion conductivity is degraded due to the increase in the crystallinity of a polyrotaxane

polymer.

Meanwhile, the composition for preparing a solid electrolyte may further include one or more polymers selected from the group consisting of a poly(ethylene oxide), poly(vinylidene fluoride), and cellulose, and the weight average molecular weight of the polymer may be 100,000 g/mol to 1,000,000 g/mol. In this case, there is an advantage of strengthening an electrolyte network, thereby increasing mechanical strength by adding a polymer having a relatively long chain, while reducing costs by reducing the amount of the polyrotaxane compound, which is relatively expensive and requires a multi-step synthesis process.

(b) Cross-linking agent

In an embodiment of the present invention, the cross-linking agent includes a compound represented by Formula 1 below and a compound represented by Formula 2 below, and preferably, may be composed of the compound represented by Formula 1 below and the compound represented by Formula 2 below.

[Formula 1]

$$O{=}C{=}N{-}L1{-}N{=}C{=}O$$

In Formula 1 above, L1 is a C1 to C10 alkylene group, and

[Formula 2]

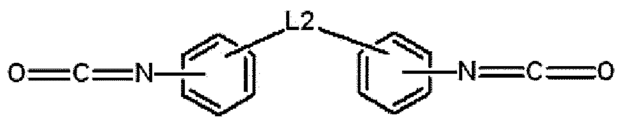

in Formula 2 above, L2 is a C1 to C5 alkylene group.

In an embodiment of the present invention, the L1 is a C3 to C8 alkylene group, preferably a hexylene group.

In an embodiment of the present invention, the compound represented by Formula 1 above is hexamethylene diisocyanate.

The compound represented by Formula 1 above is a soft segment in the cross-linking agent, and since the alkylene group in the structure can rotate, various isomers may be formed, so that the compound may serve as a flexible cross-linking agent.

In an embodiment of the present invention, the L2 is a C1 to C3 alkylene group, preferably a methylene group.

In an embodiment of the present invention, the compound represented by Formula 2 above is 4,4'-methylene diphenyl diisocyanate.

The compound represented by Formula 2 may is a hard segment in the cross-linking agent, and has a small number of isomer structures, and thus, may serve as a hard cross-linking agent.

In an embodiment of the present invention, the weight ratio of the compound represented by Formula 1 above and the compound represented by Formula 2 above is 1:1 to 10:1, preferably 2:1 to 6:1, and more preferably 3:1 to 5:1.

When the weight ratio of the compound represented by Formula 1 above and the compound represented by Formula 2 above is in the above range, it is preferable in that the tensile strength and tensile strain may be suitably secured. Specifically, when the content of the compound represented by Formula is greater than the above range, it is not preferable in that tensile strength, that is, mechanical strength, is lowered, and when the content of the compound represented by Formula 2 is greater than the above range, it is not preferable in that tensile strain is degraded. When the tensile strength is too high, the ion conductivity may decrease, so that it is important to use the soft segment and the hard segment in a suitable ratio.

In an embodiment of the present invention, the content of the cross-linking agent is 0.5 wt% to 5 wt%, preferably 0.5 wt% to 3 wt%, and more preferably 1 wt% to 2 wt%, based on the total weight of the composition for preparing a solid electrolyte.

When the content of the cross-linking agent is in the above range, it is preferable in that suitable tensile properties may be secured. Specifically, when less than 0.5 wt%, a cross-linked body may not be properly formed, and thus, an electrolyte film may not be formed, and when greater than 5 wt%, there is a problem in that tensile strain is degraded.

**(C) Lithium salt**

As the lithium salt, any lithium salt typically used in an electrolyte for a lithium secondary battery may be used without imitation, and for example, the lithium salt may include $Li^+$ as a positive ion, and include at least one selected from the group consisting of $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_4^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $BF_2C_2O_4CHF$-, $PF_4C_2O_4^-$, $PF_2C_4O_8^-$, $PO_2F_2^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$, and $SCN^-$ as a negative ion.

Specifically, the lithium salt may be one or more selected from $LiNO_3$, $LiPF_6$, $LiClO_4$, $LiBF_4$, LiFSI, lithium bis(trifluoromethanesulfonyl)imide (LiTFSI), lithium bis(pentafluoroethanesulfonyl)imide (LiBETI), $LiSO_3CF_3$, $LiPO_2F_2$, lithium bis(oxalate)borate (LiBOB), lithium difluoro(oxalate)borate (LiFOB), lithium difluoro(bisoxalato)phosphate (LiDFBP), lithium tetrafluoro(oxalate)phosphate (LiTFOP), and lithium fluoromalonato(difluoro)borate (LiFMDFB), preferably one or more selected between $LiNO_3$ and $LiClO_4$, and most preferably $LiNO_3$. When the lithium salt is $LiNO_3$, there is an advantage in that ions may move more actively due to a small molecular weight.

In an embodiment of the present invention, the concentration of the lithium salt in the composition for preparing a solid electrolyte may be 0.05 M to 3.0 M, preferably 1.25 M to 2.5 M, and more preferably 1.5 M to 2.0 M.

When the concentration of the lithium salt is less than 0.05 M, there is a disadvantage in that ion conductivity is low, and when greater than 3.0 M, the salt prevents the formation of a polymer film, and thus, may also prevent the formation of a cross-linked body.

**(d) Organic solvent**

As the organic solvent, various organic solvents typically used in a lithium electrolyte may be used without limitation. For example, one or more selected from acetone, ethanol, acetonitrile, dimethyl sulfoxide, anhydrous dimethyl sulfoxide, N-methyl-2-pyrrolidone (NMP), gamma-butyrolactone (GBL) dimethyl formamide (DMF), dimethylacetamide (DMAc), and tetrahydrofuran (THF), preferably anhydrous dimethyl sulfoxide capable of easily dissolving the polyrotaxane compound may be used, and when the solubility is changed through the modification of polyrotaxane, other organic solvents may be used.

The remainder of the total weight of the composition for preparing a solid electrolyte excluding the contents of other components, for example, the polyrotaxane compound, the cross-linking agent, and the lithium salt, other than the organic solvent, may all be the organic solvent unless otherwise stated.

Solid electrolyte

A solid electrolyte of the present invention may be prepared by a method known in the art except that the composition for preparing a solid electrolyte according to an embodiment of the present invention is used. For example, the composition for preparing a solid electrolyte may be applied on a Teflon plate, and then a heat treatment process may be performed thereon.

Specifically, a method for preparing a solid electrolyte according to an embodiment of the present invention includes thermal-curing the composition for preparing a solid electrolyte. That is, the solid electrolyte for a lithium secondary battery according to the present invention includes a thermo-cured product of the composition for preparing a solid electrolyte.

The thermal-curing may be performed at 50°C to 90°C, preferably 60°C to 80°C.

When the thermal-curing temperature is less than 50°C, there may be a problem that the curing time may be equal to or greater than 24 hours, and if greater than 90°C, it is not preferable in that a polymer may shrink.

After the Teflon plate on which the composition has been applied and thermal-cured is dried under a vacuum condition, a solid film is removed from the Teflon plate to form a solid electrolyte for a lithium secondary battery. Thereafter, a post-treatment process may be performed by performing heat treatment in an oven at 80°C to 120°C.

In an embodiment of the present invention, the content of the polyrotaxane compound may be 50 wt% to 90 wt%, preferably 50 wt% to 60 wt%, based on the total weight of the solid electrolyte. This means the content based on the solid content after the solvent is removed and the solid electrolyte is formed.

In an embodiment of the present invention, the content of the cross-linking agent may be 5 wt% to 25 wt%, preferably 10 wt% to 20 wt%, based on the total weight of the solid electrolyte. This means the content based on the solid content after the solvent is removed and the solid electrolyte is formed.

In an embodiment of the present invention, the solid electrolyte may further include a binder resin if necessary. The binder resin may be introduced for binding between solid electrolyte materials and for binding between a solid electrolyte layer and battery elements (e.g., support layer and/or electrode) stacked on both sides of the solid electrolyte layer. The material for the binder resin are not particularly limited and may be suitably selected within the range of

components used as a binder for an electrochemical device.

In an embodiment of the present invention, the thickness of the solid electrolyte may be 300 um or less, preferably 50 um to 100 um. The thickness may be suitably adjusted within the above range in consideration of ion conductivity, physical strength, the energy density of a battery to which the solid electrolyte is to be applied. For example, in terms of ion conductivity or energy density, the thickness may be 100 um or less, 70 um or less, or 60 um or less. Meanwhile, in terms of physical strength, the thickness may be 50 um or greater, 60 um or greater, or 70 um or greater.

Lithium secondary battery

Next, a lithium secondary battery according to the present invention will be described.

The lithium secondary battery according to the present invention includes a positive electrode including a positive electrode active material, a negative electrode including a negative electrode active material, and the above-described solid electrolyte for a lithium secondary battery interposed between the positive electrode and the negative electrode.

The solid electrolyte according to the present invention is a free-standing solid electrolyte, and may serve as a film-type separator instead of a general separator, but may further include a separator if necessary.

The solid electrolyte may be prepared in the form of a film, and then interposed (introduced) on at least one surface of a pre-manufactured negative electrode, a positive electrode, and a separator, or the above-described composition for preparing a solid electrolyte may be directly applied on at least one surface of the pre-manufactured negative electrode, the positive electrode, and the separator, and then introduced by drying and curing.

Since the solid electrolyte has been described above among components of a lithium secondary battery, the description thereof will be omitted, and hereinafter, other components will be described.

## (a) Positive electrode

The positive electrode according to the present invention includes a positive electrode active material, and may be manufactured by coating a positive electrode slurry including the positive electrode active material, a binder, a conductive material, a solvent, and the like on a positive electrode current collector, followed by drying and roll-pressing.

The positive electrode current collector is not particularly limited as long as it has conductivity without causing a chemical change in the battery. For example, stainless steel; aluminum; nickel; titanium; fired carbon; or aluminum or stainless steel that is surface-treated with one of carbon, nickel, titanium, silver, and the like may be used.

A lithium transition metal oxide may be used as the positive electrode active material, and may be used without limitation as long as intercalation and de-intercalation of lithium ions easily occur during charging and discharging, but may be, for example, one or more selected from a lithium-nickel-cobalt-based composite oxide, a lithium-manganese-based complex oxide, and a lithium iron phosphate-based complex oxide.

The lithium-nickel-cobalt-based composite oxide may be represented by Formula 3 below.

[Formula 3] $Li(Ni_aCo_bMn_cM_d)O_2$

In Formula 3 above, M is W, Cu, Fe, V, Cr, Ti, Zr, Zn, Al, In, Ta, Y, La, Sr, Ga, Sc, Gd, Sm, Ca, Ce, Nb, Mg, B, or Mo, and a, b, c, and d are each an atomic fraction of an independent element, wherein $0.50 \leq a \leq 0.90$, $0.05 \leq b \leq 0.25$, $0.05 \leq c \leq 0.25$, $0 \leq d \leq 0.05$, and $a+b+c+d=1$.

Preferably, in Formula 3 above, the M is Al, and the a, the b, the c, and the d may respectively be $0.60 \leq a \leq 0.90$, $0.05 \leq b \leq 0.20$, $0.05 \leq c \leq 0.20$, and $0 \leq d \leq 0.03$.

As for an NCM positive electrode active material including nickel (Ni), cobalt (Co), and manganese (Mn), the more the content of Ni, the higher the energy density, but there is a disadvantage in that positive electrode surface reactivity and stability are deteriorated. However, the disadvantage may be overcome when aluminum (Al) is introduced as the M.

The lithium-manganese-based complex oxide may be $LiMnO_2$, $LiMnO_3$, $LiMn_2O_3$, $Li_2MnO_3$, $Li_{1+y1}Mn_{2-y1}O_4$ ($0 \leq y1 \leq 0.33$), $LiMn_{2-y2}M_{y2}O_4$ (wherein M is one or more selected from Ni, Co, Fe, P, S, Zr, Ti, and Al, and $0 \leq y2 \leq 2$), $LiMn_{2-y3}M_{y3}O_2$ (wherein M is one or more selected from Co, Ni, Fe, Cr, Zn, and Ta, and $0.01 \leq y3 \leq 0.1$), or $Li_2Mn_3MO_8$ (wherein M is one or more selected from Fe, Co, Ni, Cu, and Zn) .

The lithium iron phosphate-based complex oxide may be represented by Formula 4 below.

[Formula 4] $LiFe_{1-x}M_xPO_4$

In Formula 4 above, M is one or more selected from Ni, Co, Mn, Al, Mg, Y, Zn, In, Ru, Sn, Sb, Ti, Te, Nb, Mo, Cr, Zr, W, Ir, and V, and $0 \leq x < 1$.

The positive electrode active material may be included in an amount of 60 wt% to 99 wt%, specifically 70 wt% to 90 wt% based on the total weight of solids in a positive electrode slurry. At this time, when the content of the positive electrode active material is 60 wt% or less, energy density is lowered to lower capacity.

The binder is a component for assisting in bonding of an active material and a conductive material, and in bonding to a current collector, and may be typically added in an amount of 1 wt% to 30 wt% based on the total weight of solids in a positive electrode slurry. Examples of the binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-dienetermononmer, styrene-butadiene rubber, fluorine rubber, or various copolymers thereof.

In addition, the conductive material is a material imparting conductivity without causing a chemical change in the battery, and may be added in an amount of 0.5 wt% to 20 wt% based on the total weight of solids in a positive electrode slurry.

Examples of the conductive material may include carbon black such as acetylene black, Ketjen black, channel black, furnace black, lamp black, or thermal black; graphite powder of natural graphite, artificial graphite, carbon nanotubes, or graphite, which has a very developed crystal structure; conductive fiber such as carbon fiber or metal fiber; conductive powder such as fluorocarbon powder, aluminum powder, or nickel powder; a conductive whisker such as zinc oxide and potassium titanate; a conductive metal oxide such as titanium oxide; or a conductive material such as a polyphenylene derivative, and the like.

In addition, a solvent of the positive electrode slurry may include an organic solvent such as N-methyl-2-pyrrolidone (NMP), and may be used in an amount such that a preferred viscosity is achieved when the positive electrode active material, the binder, the conductive material, and the like are included. For example, the solvent may be included in an amount such that the concentration of solids in a positive electrode slurry including a positive electrode active material, a binder, and a conductive material is 5 wt% to 90 wt%, preferably 5 wt% to 80 wt%.

(b) Negative electrode

The negative electrode according to the present invention includes a negative electrode active material, and may be manufactured by coating a negative electrode slurry including the negative electrode active material, a binder, a conductive material, a solvent, and the like on a negative electrode current collector, followed by drying and roll-pressing.

The negative electrode current collector typically has a thickness of 3 um to 500 um. The negative electrode current collector is not particularly limited as long as it has high conductivity without causing a chemical change in the battery. For example, copper; stainless steel; aluminum; nickel; titanium; fired carbon, copper or stainless steel that is surface-treated with one of carbon, nickel, titanium, silver, and the like, or an aluminum-cadmium alloy and the like may be used. Also, as in the case of the positive electrode current collector, microscopic irregularities may be formed on the surface of the negative electrode current collector to improve the coupling force of a negative electrode active material, and the negative electrode current collector may be used in various forms of such as a film, a sheet, a foil, a net, a porous body, a foam body, and a non-woven fabric body.

In addition, the negative electrode active material may include one or more selected from a carbon material capable of reversible intercalation/de-intercalation of lithium ions; a metal or an alloy of the metal and lithium; a metal complex oxide; a material capable of doping and undoping lithium; a lithium metal; and a transition metal oxide.

As the carbon material capable of reversible intercalation/de-intercalation of lithium ions, a carbon-based negative electrode active material commonly used in a lithium ion secondary battery may be used without particular limitation, and representative examples thereof may include a crystalline carbon, an amorphous carbon, or a combination thereof. Examples of the crystalline carbon may include graphite such as an irregular, planar, flaky, spherical, or fibrous natural graphite or artificial graphite, and examples of the amorphous carbon may include soft carbon (low-temperature fired carbon), hard carbon, mezophase pitch carbides, fired cokes, and the like.

As the metal or the alloy of the metal and lithium, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of the metal and lithium may be used.

As the metal composite oxide, one selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_x Fe_2O_3$ ($0 \le x \le 1$), $Li_x WO_2$ ($0 \le x \le 1$), and $Sn_xMe_{1-x} Me'_Y O_z$ (Me: Mn, Fe, Pb, Ge; Me': :Al, B, P, Si, an element in Group 1, Group 2, and Group 3 of the periodic table, halogen: $0<x\le 1$; $1\le y\le 3$; $1\le z\le 8$).

The material capable of doping and undoping lithium may be Si, $SiO_x$ ($0<x\le 2$), an Si-Y alloy (wherein Y is an element selected from the group consisting of an alkali metal, an alkaline earth metal, a Group 13 element, a Group 14 element, a transition metal, a rare earth element, and a combination thereof, but not Si), Sn, $SnO_2$, Sn-Y (wherein Y is an element selected from the group consisting of an alkali metal, an alkaline earth metal, a Group 13 element, a Group 14 element, a transition metal, a rare earth element, and a combination thereof, but not Sn), and the like, or at least one thereof may be mixed with $SiO_2$ and used. The element Y may be selected from the group consisting of Mg, Ca, Sr, Ba,

Ra, Sc, Y, Ti, Zr, Hf, Rf, V, Nb, Ta, Db(dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

Examples of the transition metal oxide include a lithium-containing titanium composite oxide (LTO), a vanadium oxide, a lithium vanadium oxide, and the like.

The negative electrode active material may be included in an amount of 80 wt% to 99 wt% based on the total weight of solids in a negative electrode slurry.

The binder is a component for assisting in bonding among a conductive material, an active material, and a current collector, and may be typically added in an amount of 1 wt% to 30 wt% based on the total weight of solids in a negative electrode slurry. Examples of the binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene-monomer, styrene-butadiene rubber, fluorine rubber, or various copolymers thereof.

The conductive material is a component for further improving the conductivity of a negative electrode active material, and may be added in an amount of 0.5 wt% to 20 wt% based on the total weight of solids in a negative electrode slurry. The conductive material is not particularly limited as long as it has conductivity without causing a chemical change in the battery, and for example, carbon black such as acetylene black, Ketjen black, channel black, furnace black, lamp black, or thermal black; graphite powder of natural graphite, artificial graphite, carbon nanotubes, or graphite, which has a very developed crystal structure; conductive fiber such as carbon fiber or metal fiber; conductive powder such as fluorocarbon powder, aluminum powder, or nickel powder; a conductive whisker such as zinc oxide and potassium titanate; a conductive metal oxide such as titanium oxide; or a conductive material such as a polyphenylene derivative, and the like may be used.

A solvent of the negative electrode slurry may include water, or an organic solvent such as NMP, an alcohol, or the like, and may be used in an amount such that a preferred viscosity is achieved when the negative electrode active material, the binder, the conductive material, and the like are included. For example, the solvent may be included in an amount such that the concentration of solids in a slurry including a negative electrode active material, a binder and a conductive material is 30 wt% to 80 wt%, preferably 40 wt% to 70 wt%.

(c) Separator

The lithium secondary battery according to the present invention may include a separator between the positive electrode and the negative electrode.

The separator is to separate the negative electrode and the positive electrode and to provide a movement path for lithium ions. Any separator may be used without particular limitation as long as it is a separator typically used in a lithium secondary battery.

Specifically, as the separator, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a stacked structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be used in a single-layered or a multi-layered structure.

The lithium secondary battery according to the present invention may be usefully used in portable devices such as a mobile phone, a notebook computer, and a digital camera, and in electric cars such as a hybrid electric vehicle (HEV).

Accordingly, according to another embodiment of the present invention, a battery module including the lithium secondary battery as a unit cell, and a battery pack including the battery module are provided.

The battery module or the battery pack may be used as a power source of one or more medium-and-large-sized devices, for example, a power tool, an electric car including an electric vehicle (EV), a hybrid electric vehicle, and a plug-in hybrid electric vehicle (PHEV), and a power storage system.

The external shape of the lithium secondary battery of the present invention is not particularly limited, but may be a cylindrical shape using a can, a square shape, a pouch shape, a coin shape, or the like.

The lithium secondary battery according to the present invention may be used in a battery cell which is used as a power source for a small-sized device, and may also be preferably used as a unit cell in a medium-and-large-sized battery module including a plurality of battery cells.

Hereinafter, the present invention will be described in detail with reference to specific examples.

## MODE FOR CARRYING OUT THE INVENTION

### <EXAMPLES>

Example 1.

(Preparation of composition for preparing solid electrolyte)

In a glove box, 0.3 g of polyrotaxane (-OH equivalent=4.5 mmol), a cross-linking agent, and $LiNO_3$ were added to 2 g of anhydrous dimethylsulfoxide (DMSO) solvent and uniformly mixed to prepare a composition for preparing a solid electrolyte. At this time, as the polyrotaxane, polyrotaxane which has the same structure as shown in (b) of FIG. 1 and in which Mw = 60,000 g/mol and the number of penetrated $\alpha$-CDs = 50 was used, and as the cross-linking agent, a mixture in which hexamethylene diisocyanate (HDI) and 4,4'-methylene diphenyl diisocyanate (MDI) were mixed at a weight ratio of 4:1 was used in a content of 1.3 wt% in the composition, and the concentration of $LiNO_3$ was set to 1.75 M.

(Preparation of solid electrolyte)

The composition for preparing a solid electrolyte, which was well mixed in the glove box, was poured into a Teflon schale and cast, placed in a sealed container and sealed, and then cured in an oven at 60°C for 24 hours and in an oven at 70°C for 24 hours.

The sealed container was opened in an argon atmosphere so as not to come into contact with the atmosphere and dried in a vacuum state for 1 hour, and a film was recovered in the glove box, punched to a size suitable for performing each of the following experimental examples, and heat-treated in an oven at 100°C.

Example 2.

A solid electrolyte was prepared in the same manner as in Example 1 except that the concentration of $LiNO_3$ was changed to 1.25 M when preparing the composition.

Example 3.

A solid electrolyte was prepared in the same manner as in Example 1 except that the concentration of $LiNO_3$ was changed to 1.5 M when preparing the composition.

Example 4.

A solid electrolyte was prepared in the same manner as in Example 1 except that the concentration of $LiNO_3$ was changed to 2 M when preparing the composition.

Example 5.

A solid electrolyte was prepared in the same manner as in Example 1 except that lithium perchlorate ($LiClO_4$) was used instead $LiNO_3$ when preparing the composition.

**Example 6.**

A solid electrolyte was prepared in the same manner as in Example 1 except that the concentration of $LiNO_3$ was changed to 0.1 M when preparing the composition.

**Example 7.**

A solid electrolyte was prepared in the same manner as in Example 1 except that the concentration of $LiNO_3$ was changed to 0.2 M when preparing the composition.

**Example 8.**

A solid electrolyte was prepared in the same manner as in Example 1 except that the concentration of $LiNO_3$ was changed to 0.5 M when preparing the composition.

**Example 9.**

A solid electrolyte was prepared in the same manner as in Example 1 except that the concentration of $LiNO_3$ was changed to 1 M when preparing the composition.

**Comparative Example 1.**

A solid electrolyte was prepared in the same manner as in Example 1 except that as the cross-linking agent, only the hexamethylene diisocyanate (HDI) was used in a content of 1.3 wt% in the composition without 4,4'-methylene diphenyl diisocyanate (MDI), and the concentration of $LiNO_3$ was set to 1.75 M.

**Comparative Example 2.**

A solid electrolyte was prepared in the same manner as in Example 1 except that as the cross-linking agent, only the 4,4'-methylene diphenyl diisocyanate (MDI) was used in a content of 1.3 wt% in the composition without hexamethylene diisocyanate (HDI), and the concentration of $LiNO_3$ was set to 1.75 M.

**Comparative Example 3.**

A solid electrolyte was prepared in the same manner as in Example 1 except that a linear polymer Pullulan ((a) structure of FIG. 2, Mw = 300,000 g/mol) was used instead of polyrotaxane, and as the cross-linking agent, a mixture in which hexamethylene diisocyanate (HDI) and 4,4'-methylene diphenyl diisocyanate (MDI) were mixed at a weight ratio of 4:1 was used in a content of 1.3 wt% in the composition, and the concentration of $LiNO_3$ was set to 1.75 M when preparing the composition.

**Comparative Example 4.**

A solid electrolyte was prepared in the same manner as in Example 1 except that a ring polymer poly($\alpha$-cyclodextrin) ((b) structure of FIG. 2, Mw = 10,000 g/mol) was used instead of polyrotaxane, and as the cross-linking agent, a mixture in which hexamethylene diisocyanate (HDI) and 4,4'-methylene diphenyl diisocyanate (MDI) were mixed at a weight ratio of 4:1 was used in a content of 1.3 wt% in the composition, and the concentration of $LiNO_3$ was set to 1.75 M when preparing the composition.

**<Experimental Examples**

**Experimental Example 1. Evaluation of ion conductivity**

The ion conductivity of the solid electrolyte prepared in each of Examples 1 to 5 and Comparative Examples 1 to 4 was obtained by measuring impedance and then using Equation 1 below.

Specifically, for the measurement, a solid electrolyte sample of each of Examples and Comparative Examples having a width of 1 $cm^2$ (1 cm$\times$1 cm) and a thickness of 3 mm was prepared. On both sides of the plate-shaped sample, a SUS substrate with excellent electron conductivity was contacted as an ion blocking electrode, and then an AC voltage was applied thereto through the electrodes on both sides of the sample. At this time, as an application condition, the measurement frequency was set to an amplitude range of 0.1 Hz to 1 MHz, and impedance was measured. The resistance of a bulk electrolyte was obtained from a point of intersection (Rb) at which a semicircle or straight line of the trajectory of the measured impedance meets a real axis, and the ion conductivity of each solid electrolyte was calculated from the area and thickness of the sample, and is shown in Table 1 below.

In addition, changes in ion conductivity according to temperatures were measured for Example 1 and schematized through the Arrhenius plot, and the results are shown in FIG. 4.

[Equation 1]

$$\sigma\ (S \cdot cm^{-1}) = \frac{1}{R_b}\frac{t}{A}$$

σ: Ion conductivity

$R_b$: Point of intersection of impedance trajectory with real axis

A: Area of sample

t: Thickness of sample

[Table 1]

| | Composition | | | | | Ion conductivity (S/cm) | |
|---|---|---|---|---|---|---|---|
| | Matrix | Content of cross-linking agent (wt%) | Ratio of cross-linking agent (HDI: MDI) | Concentration of lithium salt (M) | Kind of lithium salt | 25°C | 110°C |
| Example 1 | PRX | 1.3 | 4 : 1 | 1.75 | $LiNO_3$ | $3.11\times 10^{-3}$ | $1.05\times 10^{-2}$ |
| Example 2 | PRX | 1.3 | 4 : 1 | 1.25 | $LiNO_3$ | $1.14x\ 10^{-3}$ | $7.94\times 10^{-3}$ |
| Example 3 | PRX | 1.3 | 4 : 1 | 1.5 | $LiNO_3$ | $1.75\times 10^{-3}$ | $8.61\times 10^{-3}$ |
| Example 4 | PRX | 1.3 | 4 : 1 | 2 | $LiNO_3$ | $1.86\times 10^{-3}$ | $8.23\times 10^{-3}$ |
| Example 5 | PRX | 1.3 | 4 : 1 | 1.75 | $LiClO_4$ | $1.47\times 10^{-3}$ | $7.88\times 10^{-3}$ |
| Comparative Example 1 | PRX | 1.3 | 5:0 | 1.75 | $LiNO_3$ | $9.76\times 10^{-4}$ | $6.88\times 10^{-3}$ |
| Comparative Example 2 | PRX | 1.3 | 0:5 | 1.75 | $LiNO_3$ | $1.04\times 10^{-4}$ | $8.41\times 10^{-4}$ |
| Comparative Example 3 | Pullulan | 1.3 | 4 : 1 | 1.75 | $LiNO_3$ | $5.91\times 10^{-4}$ | $1.10\times 10^{-3}$ |
| Comparative Example 4 | PCD | 1.3 | 4 : 1 | 1.75 | $LiNO_3$ | $4.45\times 10^{-4}$ | $9.88\times 10^{-4}$ |

Through the results of Example 1 to Example 3 of Table 1 above, it can be confirmed that the higher the concentration of lithium salt, the higher the ion conductivity. However, the ion conductivity of Example 4 was lowered compared to that of Example 1, through which it can be confirmed that the effect of improving ion conductivity is reduced at a certain concentration or greater (2 M or greater).

In addition, when comparing Example 1 to Example 5 which used different lithium salts of the same concentration, it can be confirmed that the smaller the molecular weight of lithium salt, the higher the ion conductivity.

In addition, when comparing Example 1 and Comparative Examples 1 to 4 which used lithium salts of the same concentration and type, it can be confirmed that Example 1 in which a polyrotaxane compound was used as a matrix, and the compound (HDI) represented by Formula 1 and the compound (MDI) represented by Formula 2 were used together as a cross-linking agent, has higher ion conductivity than Comparative Examples 1 to 4.

Specifically, when compared to Comparative Example 3 which used a linear polymer as a polymer matrix and Comparative Example 4 which used a ring polymer as a polymer matrix, Example 1 which used polyrotaxane having a necklace structure has higher ion conductivity due to the motility of molecules.

In addition, even when polyrotaxane is used as a polymer matrix, when only HDI or MDI is used as a cross-linking agent as in Comparative Examples 1 and 2, it can be seen that the effect of improving ion conductivity is reduced.

In addition, it can be confirmed through FIG. 4 that the ion conductivity of the electrolyte polymer according to Example 1 changes linearly according to the change in temperature, which means that the solid electrolyte including the polyrotaxane compound follows the Arrhenius transport model.

**Experimental Example 2. Measurement of mechanical physical properties**

Samples of the solid electrolytes prepared in Examples 1 to 3 and 6 to 9, and Comparative Examples 1 to 4 and having a size of 5 mm × 50 mm were stretched at a rate of 5 mm/min using a micro tensile tester at a temperature

of 25°C and a humidity of 60% to measure tensile strength, tensile strain, and tensile toughness, and the results of Table 2 below were obtained.

For Example 1 and Comparative Examples 1 to 4 using lithium salts of the same concentration, the results of tensile physical properties measurement are also shown in the graph of FIG. 5.

[Table 2]

| | Composition | | | | | Tensile physical properties | | |
|---|---|---|---|---|---|---|---|---|
| | Matr ix | Cont ent of cros slink ing agen t (wt% ) | Rati o of cros slink ing agen t (HDI :MDI ) | Conc entr atio n of lith ium salt (M) | Kind of lithi um salt | Tens ile stre ngth (MPa ) | Tensi le strai n (%) | Tens ile toug hnes s (MJ/ $m^3$) |
| Example 1 | PRX | 1.3 | 4 : 1 | 1.75 | $LiNO_3$ | 0.19 | 194.7 | 14.3 |
| Example 2 | PRX | 1.3 | 4 : 1 | 1.25 | $LiNO_3$ | 0.4 | 199.2 | 15.1 |
| Example 3 | PRX | 1.3 | 4 : 1 | 1.5 | $LiNO_3$ | 0.21 | 198 | 14.8 |
| Example 6 | PRX | 1.3 | 4 : 1 | 0.1 | $LiNO_3$ | 7.2 | 220 | 18.4 |
| Example 7 | PRX | 1.3 | 4 : 1 | 0.2 | $LiNO_3$ | 6.0 | 204 | 17.0 |
| Example 8 | PRX | 1.3 | 4 : 1 | 0.5 | $LiNO_3$ | 3.2 | 200.9 | 16.7 |
| Example 9 | PRX | 1.3 | 4 : 1 | 1 | $LiNO_3$ | 1.02 | 200.3 | 16.4 |
| Comparative Example 1 | PRX | 1.3 | 5 : 0 | 1.75 | $LiNO_3$ | 0.09 | 155.2 | 8.18 |
| Comparative Example 2 | PRX | 1.3 | 0 : 5 | 1.75 | $LiNO_3$ | 0.07 | 46.1 | 1.61 |
| Comparative Example 3 | Pull ulan | 1.3 | 4 : 1 | 1.75 | $LiNO_3$ | 0.03 | 60.1 | 1.7 |
| Comparative Example 4 | PCD | 1.3 | 4 : 1 | 1.75 | $LiNO_3$ | 0.24 | 78.4 | 9.3 |

Through the results of Table 2, it can be confirmed that the tensile strength, tensile strain, and tensile toughness all appear high in Examples 1 to 3 and 6 to 9, but do not in Comparative Examples 1 to 4.

Specifically, it can be confirmed that the tensile strain, and tensile toughness of Comparative Example 1 which did not use MDI as a cross-linking agent and Comparative Example 2 which did not use HDI as a cross-linking agent were significantly decreased compared to those of Example 1. Particularly, the significant decrease in tensile strain in Comparative Example 2 may be caused by the benzene structure of the MDI cross-linking agent having a rigid structure compared to the flexible HDI having a linear structure.

In addition, it can be confirmed that Example 1 which used the polyrotaxane compound having a necklace structure according to an embodiment of the present invention has improved tensile strength, tensile strain, and tensile toughness compared to those of Comparative Example 3 which used the linear Pullulan. In addition, when compared to Comparative Example 4 which used the cyclic polymer PCD, it can be confirmed that the tensile strength is at a similar level, the tensile strain and toughness are much higher.

Particularly, it is possible to identify differences in tensile properties under the same lithium salt concentration condition at a glance through the graph of FIG. 5, and it can be seen that tensile strain and tensile strength may be both secured high in Example 1 through the graph of (a), and the tensile toughness of Example 1 is the highest through the graph of (b) .

In addition, through comparison between Examples 1 to 3 and 6 to 9, it can be confirmed that the lower the lithium salt content, the better the tensile strength and the tensile strain.

**Experimental Example 3. Performance evaluation of lithium secondary battery**

To N-methyl-2-pyrrolidone (NMP), a positive electrode active material ($LiFePO_4$), a conductive material (carbon black), and a binder (polyvinylidene fluoride) were added at a weight ratio of 8:1:1 to prepare a positive electrode slurry

(solid content: 37.4 wt%). The positive electrode slurry was applied and dried on an aluminum (Al) thin film having a thickness of about 12 um as a positive electrode current collector, and then pressing was performed thereon to manufacture a positive electrode having a loading amount of 6.0 $mg/cm^2$ or greater. A lithium ribbon was used as a negative electrode active material.

The positive electrode, the solid electrolyte prepared according to Example 1, and a negative electrode were sequentially stacked to manufacture an electrode assembly, and the assembled electrode assembly was received in a coin-type battery case to manufacture a lithium secondary battery.

The manufactured lithium secondary battery was charged at a constant current (CC) at 60°C with a 0.1 C-rate current until the voltage reached 4.0 V, and then discharged at a constant current (CC) of 0.1 C-rate and cut-off at 2.5 V for 5 times. Thereafter, constant current (CC) charging and discharging were continuously performed with a 0.2 C-rate current in the above manner, and then the battery capacity was measured, which is shown in FIG. 6.

As shown in the charge and discharge curves of FIG. 6, it can be seen that the battery employing the solid electrolyte of Example 1 may be stably charged/discharged because the voltage difference between charging and discharging is only 0.09 V. Furthermore, even at twice the rate from 0.1 C-rate to 0.2 C-rate, the voltage difference of the charge/discharge curves appears to be maintained at 0.09 V. This is the result of high stability and ion conductivity of the electrolyte.

## Claims

**1.** A composition for preparing a solid electrolyte, comprising:

a polyrotaxane compound, a cross-linking agent, a lithium salt, and an organic solvent,
wherein the cross-linking agent includes a compound represented by Formula 1 and a compound represented by Formula 2 below:

[Formula 1]

$$O=C=N-L1-N=C=O$$

wherein in Formula 1,
L1 is a C1 to C10 alkylene group,

[Formula 2]

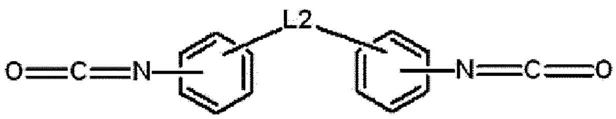

wherein in Formula 2,
L2 is a C1 to C5 alkylene group.

**2.** The composition of claim 1, wherein the polyrotaxane compound comprises 10 to 90 α-cyclodextrin molecules.

**3.** The composition of claim 1, wherein the weight average molecular weight of the polyrotaxane compound is 10,000 g/mol to 100,000 g/mol.

**4.** The composition of claim 1, wherein the content of the polyrotaxane compound is 5 wt% 20 wt% based on the total weight of the composition.

**5.** The composition of claim 1, wherein the weight ratio of the compound represented by Formula 1 and the compound represented by Formula 2 is 1:1 to 10:1.

**6.** The composition of claim 1, wherein the content of the cross-linking agent is 0.5 wt% 5 wt% based on the total weight of the composition.

**7.** The composition of claim 1, wherein the lithium salt is one or more selected from $LiNO_3$ and $LiClO_4$.

**8.** The composition of claim 1, wherein the concentration of lithium salt in the composition is 0.05 M to 3.0 M.

**9.** The composition of claim 1, further comprising one or more polymers selected from the group consisting of polyethylene oxide, polyvinylidene fluoride, and cellulose.

**10.** A method for preparing a solid electrolyte for a lithium secondary battery, the method comprising thermal-curing the composition of claim 1.

**11.** The method of claim 10, wherein the thermal-curing is performed at a temperature from 50°C to 90°C.

**12.** A solid electrolyte for a lithium secondary battery, the solid electrolyte comprising a thermo-cured product of the composition of claim 1.

**13.** A lithium secondary battery comprising:

a positive electrode including a positive electrode active material;
a negative electrode including a negative electrode active material; and
the solid electrolyte of claim 12 interposed between the positive electrode and the negative electrode.

**Patentansprüche**

**1.** Zusammensetzung zur Herstellung eines Festelektrolyten, umfassend:

eine Polyrotaxanverbindung, ein Vernetzungsmittel, ein Lithiumsalz und ein organisches Lösungsmittel, wobei das Vernetzungsmittel eine Verbindung, dargestellt durch Formel 1, und eine Verbindung, dargestellt durch Formel 2 unten, einschließt:

[Formel 1]

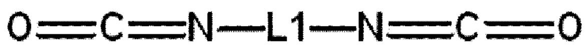

wobei in Formel 1
L1 eine C1- bis C10-Alkylengruppe ist,

[Formel 2]

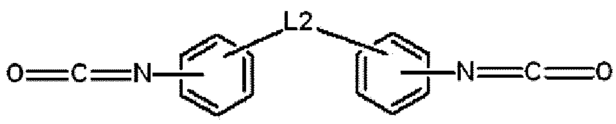

wobei in Formel 2
L2 eine C1- bis C5-Alkylengruppe ist.

**2.** Zusammensetzung nach Anspruch 1, wobei die Polyrotaxanverbindung 10 bis 90 $\alpha$-Cyclodextrinmoleküle umfasst.

**3.** Zusammensetzung nach Anspruch 1, wobei das gewichtsgemittelte Molekulargewicht der Polyrotaxanverbindung 10.000 g/mol bis 100.000 g/mol beträgt.

**4.** Zusammensetzung nach Anspruch 1, wobei der Gehalt der Polyrotaxanverbindung 5 Gew.-% bis 20 Gew.-%, bezogen auf das Gesamtgewicht der Zusammensetzung, beträgt.

**5.** Zusammensetzung nach Anspruch 1, wobei das Gewichtsverhältnis der Verbindung, dargestellt durch Formel 1, und der Verbindung, dargestellt durch Formel 2, 1:1 bis 10:1 beträgt.

6. Zusammensetzung nach Anspruch 1, wobei der Gehalt des Vernetzungsmittels 0,5 Gew.-% bis 5 Gew.-%, bezogen auf das Gesamtgewicht der Zusammensetzung, beträgt.

7. Zusammensetzung nach Anspruch 1, wobei das Lithiumsalz eines oder mehrere, ausgewählt aus $LiNO_3$ und $LiClO_4$ , ist.

8. Zusammensetzung nach Anspruch 1, wobei die Konzentration des Lithiumsalzes in der Zusammensetzung 0,05 M bis 3,0 M beträgt.

9. Zusammensetzung nach Anspruch 1, ferner umfassend ein oder mehrere Polymere, ausgewählt aus der Gruppe, bestehend aus Polyethylenoxid, Polyvinylidenfluorid und Cellulose.

10. Verfahren zur Herstellung eines Festelektrolyten für eine Lithiumsekundärbatterie, wobei das Verfahren das thermische Härten der Zusammensetzung nach Anspruch 1 umfasst.

11. Verfahren nach Anspruch 10, wobei das thermische Härten bei einer Temperatur von 50 °C bis 90 °C durchgeführt wird.

12. Festelektrolyt für eine Lithiumsekundärbatterie, wobei der Festelektrolyt ein thermisch gehärtetes Produkt der Zusammensetzung nach Anspruch 1 umfasst.

13. Lithiumsekundärbatterie, umfassend:

eine positive Elektrode, die ein Positivelektrodenaktivmaterial einschließt;
eine negative Elektrode, die ein Negativelektrodenaktivmaterial einschließt; und
den Festelektrolyten nach Anspruch 12, der zwischen der positiven Elektrode und der negativen Elektrode angeordnet ist.

## Revendications

1. Composition pour préparer un électrolyte solide, comprenant :

un composé de polyrotaxane, un agent de réticulation, un sel de lithium et un solvant organique,
dans laquelle l'agent de réticulation inclut un composé représenté par la Formule 1 et un composé représenté par la Formule 2 ci-dessous :

[Formule 1]

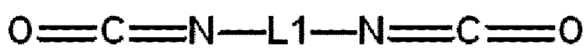

dans laquelle dans la Formule 1,
L1 est un groupe alkylène en C1 à C10,

[Formule 2]

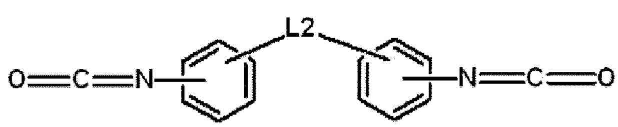

dans laquelle dans la Formule 2,
L2 est un groupe alkylène en C1 à C5.

2. Composition selon la revendication 1, dans laquelle le composé de polyrotaxane comprend 10 à 90 molécules de α-cyclodextrine.

3. Composition selon la revendication 1, dans laquelle le poids moléculaire moyen en poids du composé de polyrotaxane

est 10 000 g/mol à 100 000 g/mol.

**4.** Composition selon la revendication 1, dans laquelle la teneur en composé de polyrotaxane est 5 % en poids à 20 % en poids sur la base du poids total de la composition.

**5.** Composition selon la revendication 1, dans laquelle le rapport en poids du composé représenté par la Formule 1 et du composé représenté par la Formule 2 est 1:1 à 10:1.

**6.** Composition selon la revendication 1, dans laquelle la teneur en agent de réticulation est 0,5 % en poids à 5 % en poids sur la base du poids total de la composition.

**7.** Composition selon la revendication 1, dans laquelle le sel de lithium est un ou plusieurs éléments sélectionnés parmi LiNOs et $LiClO_4$.

**8.** Composition selon la revendication 1, dans laquelle la concentration de sel de lithium dans la composition est 0,05 M à 3,0 M.

**9.** Composition selon la revendication 1, comprenant en outre un ou plusieurs polymères sélectionnés dans le groupe constitué d'oxyde de polyéthylène, fluorure de polyvinylidène et cellulose.

**10.** Procédé de préparation d'un électrolyte solide pour une batterie rechargeable au lithium, le procédé comprenant le durcissement thermique de la composition selon la revendication 1.

**11.** Procédé selon la revendication 10, dans laquelle le durcissement thermique est effectué à une température de 50°C à 90°C.

**12.** Électrolyte solide pour une batterie rechargeable au lithium, l'électrolyte solide comprenant un produit thermodurci de la composition selon la revendication 1.

**13.** Batterie rechargeable au lithium comprenant :

une électrode positive incluant un matériau actif d'électrode positive ;
une électrode négative incluant un matériau actif d'électrode négative ; et
l'électrolyte solide selon la revendication 12 interposé entre l'électrode positive et l'électrode négative.

FIG. 1

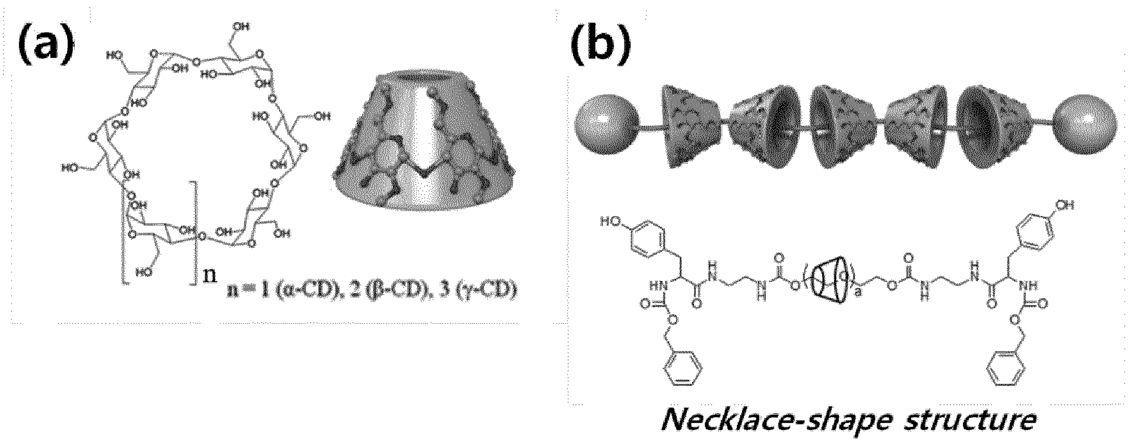

(a) n = 1 (α-CD), 2 (β-CD), 3 (γ-CD)

(b)

*Necklace-shape structure*

**Polyrotaxane (PRX)**

FIG. 2

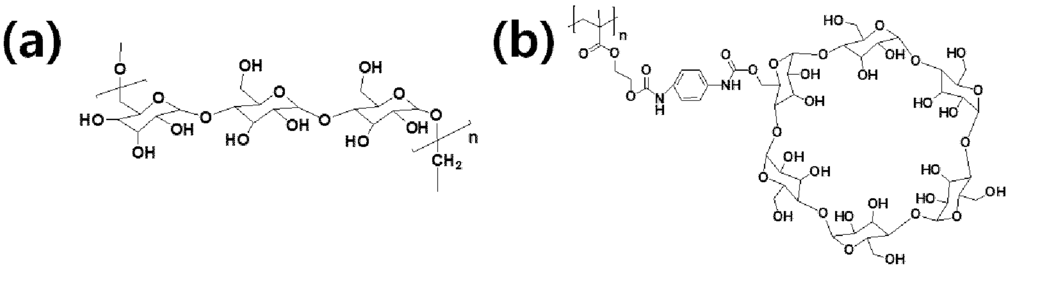

(a) *Linear-shape structure*

**Pullulan (Pul)**

(b) *Ring-shape structure*

**Poly(α-cyclodextrin) (PCD)**

FIG. 3

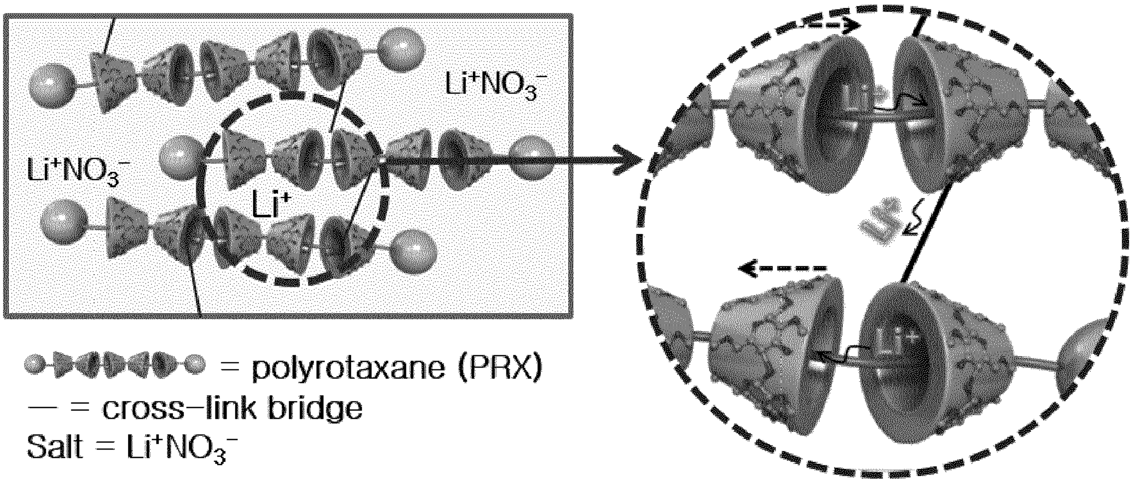
Li+NO3−
Li+NO3−
Li+
Li+
Li+
Li+
= polyrotaxane (PRX)
— = cross-link bridge
Salt = Li+NO3−

FIG. 4

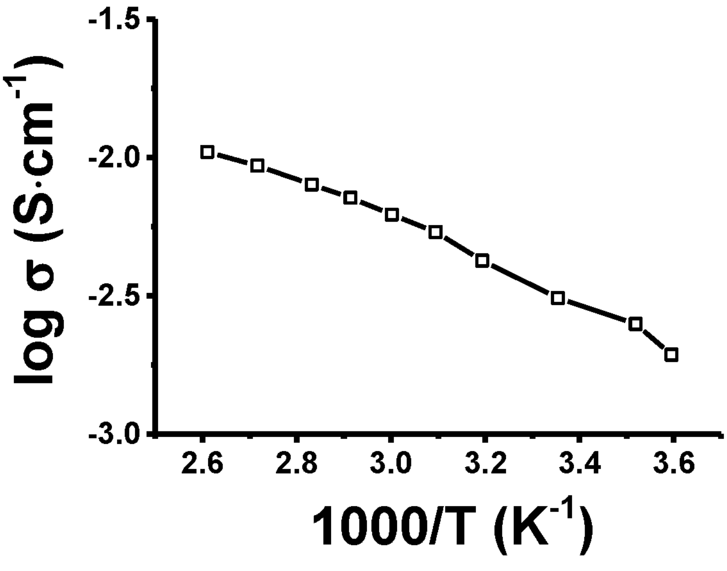
-1.5
-2.0
-2.5
-3.0
log σ (S·cm-1)
2.6
2.8
3.0
3.2
3.4
3.6
1000/T (K-1)

FIG. 5

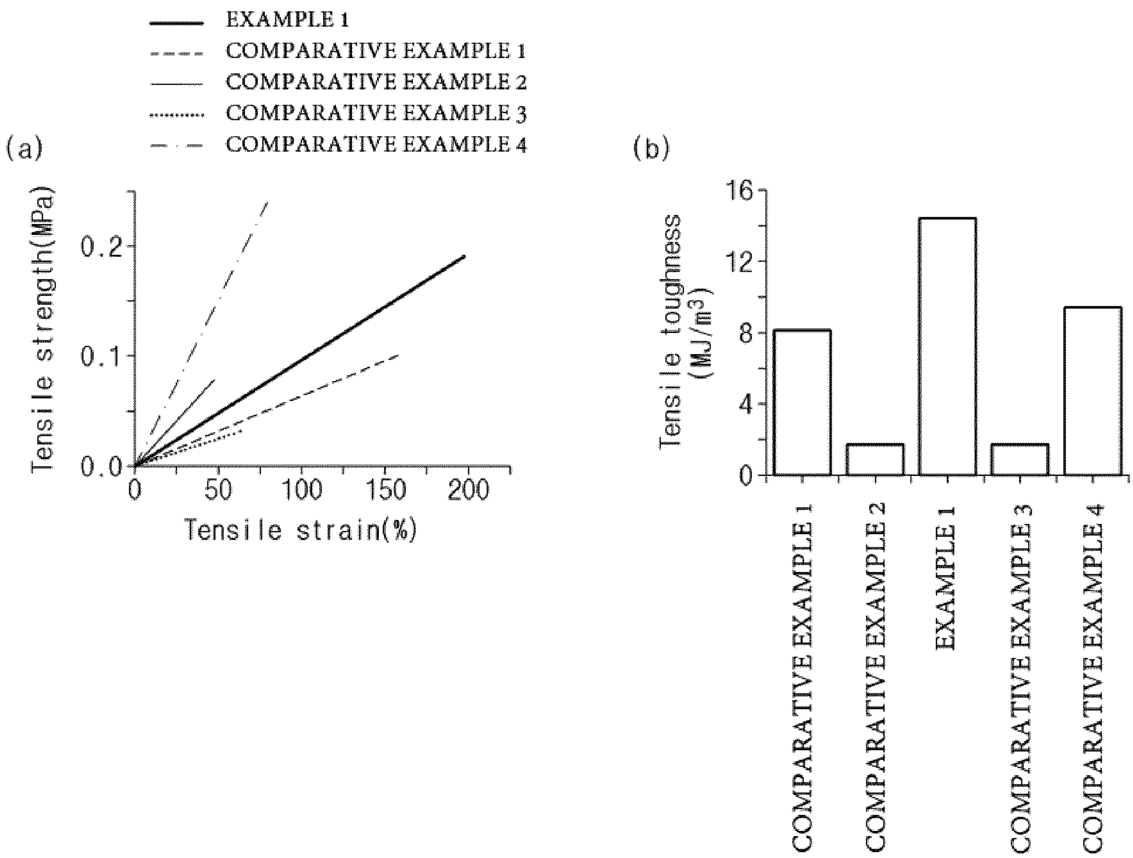
EXAMPLE 1
COMPARATIVE EXAMPLE 1
COMPARATIVE EXAMPLE 2
COMPARATIVE EXAMPLE 3
COMPARATIVE EXAMPLE 4
(a)
Tensile strength(MPa)
0.0
0.1
0.2
0
50
100
150
200
Tensile strain(%)
(b)
Tensile toughness (MJ/m3)
0
4
8
12
16
COMPARATIVE EXAMPLE 1
COMPARATIVE EXAMPLE 2
EXAMPLE 1
COMPARATIVE EXAMPLE 3
COMPARATIVE EXAMPLE 4

FIG. 6

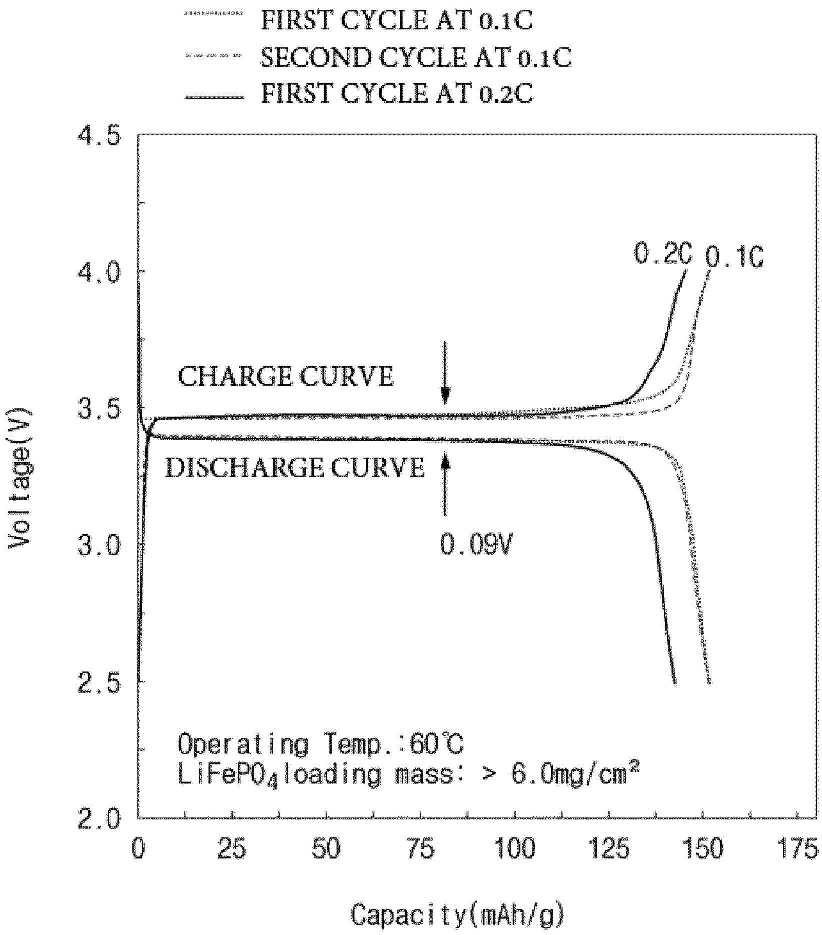
FIRST CYCLE AT 0.1C
SECOND CYCLE AT 0.1C
FIRST CYCLE AT 0.2C
4.5
4.0
3.5
3.0
2.5
2.0
Voltage(V)
0
25
50
75
100
125
150
175
Capacity(mAh/g)
0.2C
0.1C
CHARGE CURVE
DISCHARGE CURVE
0.09V
Operating Temp.:60℃
LiFePO4 loading mass: > 6.0mg/cm²

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210016331